# EUROPEAN PATENT SPECIFICATION

(11) **EP 3 523 087 B1**
(45) Date of publication and mention of the grant of the patent: **29.06.2022**
(21) Application number: 17858818.2
(22) Date of filing: 05.10.2017
(51) Int. Cl.: B23G 1/04, B23G 1/18, B23G 1/32, G05B 19/18

(54) **MANUFACTURE OF SCREWS RODS AND JOINT PRODUCTION AND MACHINE FOR MANUFACTURE THEREOF**
HERSTELLUNG VON SCHRAUBENSTÄBEN UND GELENKHERSTELLUNG UND MASCHINE ZUR HERSTELLUNG DAVON
FABRICATION DE TIGES DE VIS ET PRODUCTION CONJOINTE ET MACHINE DESTINÉE À LEUR FABRICATION

(30) Priority: 06.10.2016 SE 1651313
(43) Date of publication of application: 14.08.2019
(73) Proprietor: Aktiebolaget Ledarskruv, 139 52 Värmdö (SE)
(72) Inventor: GUSTAFSSON, Gunnar, 139 60 Värmdö (SE); GUSTAFSSON, Magnus, 139 51 Värmdö (SE)
(74) Representative: Zacco Sweden AB
(86) International application number: PCT/SE2017/050975
(87) International publication number: WO 2018/067062

(56) References cited:
- JP-A- H09 290 324
- KR-A- 20030 000 183
- KR-A- 20120 001 464
- US-A- 3 221 607
- US-A- 4 580 225
- US-A1- 2007 245 540
- US-A1- 2016 008 901
- US-B1- 6 425 829
- FREDERIK GESTHUYSEN: "CNC für anspruchsvolle Drehmaschinen", WERKSTATT UND BETRIEB, HANSER, MÜNCHEN, vol. 146, no. 6, 1 June 2013 (2013-06-01), pages 66-67, XP001582822, ISSN: 0043-2792

## Description

### THE PRIOR ART

The invention relates to a method for the manufacture of a section of screw rod that extends along the z-axis according to the preamble of claim 1. The invention also relates to a processing configuration for the manufacture of sections of screw rod according to the preamble of claim 8, a multioperation machine for the manufacture of sections of screw rod and a computer program according Z to the preamble of claim 14.

### BACKGROUND

The invention can be related to manufacturing methods for the manufacture of screw rods and joint production and a machine for the manufacture of these. Sections of screw rod that are to be joined to each other by screwing are currently manufactured with each of the sections comprising one or several threaded grooves and each with a male part (the tap end) comprising a first thread arranged at one of its ends, and each with a female part (the die end) arranged at its second end comprising a second thread corresponding to the first thread (or with a tap/tap or die/die design).

A first section of screw rod is jointed to a second section of screw rod by screwing them together. It is vital that the sections of screw rod are located in the correct locations relative to each other when the jointing operation has been completed such that the threaded grooves at the joint do not form an uneven screwed joint with a depression or elevation after being screwed together (assembly).

The first and second sections of screw rod together form after assembly a screw rod (such as a screw for a screw-driven lift).

Each section of screw rod is currently manufactured individually, which means that each male part and each female part are processed manually for the optimal adaptation and assembly of two neighbouring sections of screw rod. The current manufacture sometimes comprises methods to alternately assemble two (or more) sections of screw rod to each other, whereby the method includes to measure after each assembly operation the distribution error across the screw joint and after each disassembly operation to remove by processing material from the die end until an even screw joint is achieved. The manufacture comprises further an additional manual operation in which the tap end of a first section of screw rod is, after a correct assembly together with the die end of a second section of screw rod, co-drilled with transverse holes through the tap end and the die end. There is mounted in such a transverse hole after assembly of the first and the second sections of screw rod to each other one (or several) tubular pins for the rotational locking of the sections of screw rod relative to each other.

Before the sections of screw rod are disassembled during their manufacture, they are marked across the screw joint with an axial index and an individual labelling. The individual labelling is unique to a specific screw joint such that an assembly engineer can screw together during assembly individual sections of screw rod that have been adapted to each other.

Technological background is shown in the document "CNC für anspruchsvolle Drehmaschinen", Werkstatt und betrieb, Hanser, München, vol. 146, no. 6, 1 June 2013, pages 66-67. XP001582822; ISSN: 0043-2792, which discloses a method, according to the preamble of claim 1, for the manufacture of a section of screw rods extending along a z-axis and the workpiece comprises at least one thread groove, wherein the processing of the workpiece to comprises a first plane of contact that extends transverse to the z-axis.

### SUMMARY OF THE INVENTION

One aim of the present invention is to be able to carry out batch production of sections of screw rod in a cost-efficient manner, each one of which is compatible with another section of screw rod, independently of any other. Thus, it is an aim to achieve manufacture in which an individual freely chosen section of screw rod is to be able to be mounted at another individual freely chosen section of screw rod without forming a depression or an elevation after being screwed together.

A second aim is to achieve a modular system of sections of screw rod in which large quantities can be kept in stock without any individual unique labelling associated with a specific section of screw rod needing to be done.

A further aim is to be able to increase the number of sections of screw rod at a screw rod (at, for example, a screw-driven lift) in a modular system (for, for example, use at in screw-driven lifts) by manufacturing shorter sections of screw rod without time-consuming manual processing, and in this way to achieve less bulky and lighter sections of screw rod, which, in turn, promotes cost-efficient transport, and secure handling and assembly.

One aim is that it is to be possible to exchange any section of screw rod in a screw rod that becomes damaged for a freely chosen undamaged screw rod, without it being necessary to exchange the complete screw rod (for example the screw for a screw-driven lift).

One aim is to be able to extend an existing screw rod with a supplementary section of screw rod and to increase the lifting height (the distance of travel) of the screw rod.

One further aim is to minimise waste of material during the manufacture of sections of screw rod by making it possible to keep in stock sections of screw rod of a uniform length.

A further aim is to automate the manufacture of sections of screw rod.

One aim is to achieve a modular system with sections of screw rod for application in screw-driven lifts.

One aim is to develop prior art technology within the field.

At least one of the aims described above has been achieved through a method, according to claim 1, for the manufacture of a screw rod that extends along the z-axis, whereby the method includes the steps: processing of a workpiece to comprise at least one thread groove or threaded groove; processing of the workpiece to comprise a first plane of contact that extends transverse to the z-axis; measuring in of the first plane of contact and a first reference point at the threaded groove relative to each other; determination of the position of a first entry point at the threaded groove based on the said measuring in; processing of the workpiece to comprise a first section of assembly thread that demonstrates at least a first thread comprising a first connection point that is connected at the first plane of contact.

It is preferable that the workpiece is processed to comprise a first section of assembly thread that demonstrates at least a first thread comprising a first connection point that makes contact with the first plane of contact, the position of which is calculated by the control unit that considers the said measuring in of the first plane of contact and the first reference point at the threaded groove and that considers the said determination of the position of the first entry point at the threaded groove based on the said measuring in.

It is preferable that the manufacture be carried out in a CNC machine.

Alternatively, extended workpieces, each comprising at least one threaded groove, are fed, each from a feed magazine, to, for example, a CNC machine or other multioperation machine.

It is preferable that the workpiece be processed to comprise the first section of assembly thread with external and internal fit, together with an appropriate thread for connection.

It is preferable that the workpiece be processed to comprise a first plane of contact by coarse and fine processing.

In this way, the measuring in can take place accurately, since the gripper can hold the workpiece securely without this being displaced from its position.

It is preferable that the gripper comprise a chuck and/or clamping sleeve for securing the workpiece.

Alternatively, the sensor comprises a measurement probe and/or a laser measurement device.

It is appropriate that a first measuring in, such as the measuring in of the plane of contact, is carried out.

It is preferable that the sensor be displaced with the aid of the positioning arrangement to the plane of contact of the workpiece and a first measurement signal be transferred to a control unit, such as a control unit at a multioperation machine, such as, for example, a CNC machine.

A new coordinate value in the direction of the z-axis is in this way activated, and a new set value is determined in the respective coordinate system for the plane of contact of the workpiece.

The position of the plane of contact relative to a coordinate system assigned to a control unit of e.g. a multioperation machine is in this way determined.

It is preferable that the measured value of the sensor be transferred through variables and macro routines to a control unit such as a control unit at a multioperation machine (for example, a CNC machine).

It is appropriate that a second measuring in be carried out, such as the measuring in of a reference point at the threaded groove.

It is preferable that the sensor be displaced with the aid of the positioning arrangement to the reference point at the threaded groove of the workpiece, which reference point is located at a distance from the plane of contact.

It is appropriate that the displacement of the sensor to the reference point at the threaded groove of the workpiece be carried out in such a manner that the displacement establishes a distance between the plane of contact and the reference point, preferably 5-50 mm.

It is advantageous that the distance be as small as possible in order to avoid any inherent errors that may be present and that otherwise have a tendency to propagate as the distance becomes longer.

It is preferable that the sensor be displaced with the aid of the positioning arrangement in a primary search to the smaller diameter (such as 34 mm) of the threaded groove, than the final measured in diameter of the threaded groove that corresponds to the mean diameter.

It is in this way determined that the measurement means moves freely during the measuring in of the mean diameter, since the width of the threaded groove increases as the diameter increases.

It is preferable that the threaded groove be displaced by rotation of the gripper through an angle of rotation in the plane of rotation of the gripper (the c-axis) in the case in which the measurement means does not reach a position for the measuring in of the smaller diameter of the threaded groove.

It is appropriate that the angle of rotation be 40 degrees or another angle of rotation, depending on the pitch of the threaded screw.

It is preferable that the second measuring in of a reference point at the threaded groove be carried out by means of a secondary search that essentially corresponds to the method of carrying out the primary search, with, however, half of the angle of rotation.

It is appropriate that the halved angle of rotation correspond to 20 degrees.

It is appropriate that a first value for the smaller diameter be determined during the primary search and a second value during the second search.

It is preferable that the positioning arrangement be controlled such that it positions the sensor at a position centrally between the first and the second values.

A continued determination of the measurement macro routine is in this way achieved, when both the primary and the secondary searches have achieved an acceptable depth of diameter for the smaller diameter of the threaded groove.

It is appropriate that the sensor be subsequently positioned at the position of the mean diameter (for example, 36 mm).

It is preferable that the gripper be rotated through a positive angle of rotation in the plane of rotation of the gripper until the sensor indicates the position of the first flank of the threaded groove at the level of the mean diameter.

It is preferable that the gripper be subsequently rotated through a negative angle of rotation in the plane of rotation of the gripper until the sensor indicates the position of the second flank of the threaded groove at the level of the mean diameter.

A value for the absolute thread centre of the threaded groove can in this way be obtained.

It is appropriate that the value for the absolute thread centre of the threaded groove be stored on a medium that can be read at a control unit at a multioperation machine (such as a CNC machine).

The orientation and position of the threaded groove relative to the coordinate system of the multioperation machine in the plane of rotation (c-axis) of the gripper is in this way determined.

It is preferable that the zero value of the plane of rotation (c-axis) of the gripper be calculated, with the aid of the values obtained during the primary and second searches.

It is preferable, furthermore, that the values to which the workpiece is to be rotated for further processing be calculated, with the aid of the values obtained during the primary and second searches.

It is appropriate that the calculation take place by means of the macro values and variable values obtained.

Alternatively, the sensor is positioned at positions along the direction of the z-axis as a control measurement of the orientation of the threaded groove relative to the coordinate system of the multioperation machine.

It is preferable that the sensor be positioned at search positions along the direction of the z-axis at a distance from the position of the positioning of the sensor during the first and second measuring in operations, which distance from the plane of contact is greater than the distance measured during the first and second measuring in operations.

In this way, a further measurement is obtained that eliminates any errors that arise if the workpiece were to be very slightly bent (invisible to the naked eye).

It is appropriate that the sensor moves based on the calculated value for the position of the c-axis to a position of the mean diameter, and search for first and second flanks of the threaded groove solely by displacement of the sensor along the z-axis.

New values are in this way obtained, based on which the control unit can calculate through variables the direction in which the gripper is to be rotated in the plane of rotation (c-axis).

It is preferable that the measuring in of the first and second flanks of the threaded groove be repeated by displacement of the sensor along the z-axis.

It is appropriate, as a consequence of the measuring in of the first plane of contact and the first reference point of the threaded groove relative to each other, and through determination of the position of the first entry point of the threaded groove based on the said measuring in, that the multioperation machine can now start the processing of the workpiece to comprise a first section of assembly thread that demonstrates at least a first thread comprising a first connection point that makes contact with the first plane of contact.

It is preferable that the section of assembly thread comprise a freely chosen threaded section, for example a metric thread.

It is appropriate, as a consequence of the measuring in of the first plane of contact and the first reference point of the threaded groove relative to each other, and through determination of the position of the first entry point of the threaded groove based on the said measuring in, that the multioperation machine can now start processing of the workpiece to comprise at least one rotational locking hole that extends transverse to the z-axis and that is positioned through the first section of assembly thread at a pre-determined angle in the plane of rotation (c-axis).

In this way, a method is obtained to manufacture a set of screw rods in a modular system in which all screw rods are identical with a determined orientation of rotational locking holes and with first connection points for the sections of assembly thread at each relevant first plane of contact and with rotation locking holes that are compatible with each other.

It is preferable that it be taken into consideration that the joining of two screw rods comprise a pre-determined (or it may be empirically determined) tightening torque, in which the method comprises measuring in of the first plane of contact and a first reference point at the threaded groove relative to each other; determination of the position of a first entry point at the threaded groove based on the said measuring in; processing of the workpiece to comprise a first section of assembly thread that demonstrates at least a first thread comprising a first connection point that makes contact with the first plane of contact, in which the processing and the positioning of the first connection point are carried out by, for example, a control unit based on a pre-determined tightening torque.

The screw rod can in this way comprise a first end designed as a male end.

It is appropriate that the measuring in be carried out with a mechanical sensor and/or laser measurement device.

It is appropriate that the sensor carry out a measuring in of the workpiece according to a probe-based procedure.

It is preferable that the measuring in be carried out after the workpiece has been processed to comprise the plane of contact.

It is appropriate that the method comprise displacement of the workpiece along the z-axis to a desired modular length, in which a second end of the workpiece is positioned for processing.

It is preferable that processing of the workpiece be achieved to comprise a second plane of contact that extends transverse to the z-axis, in which the method comprises; measuring in of the second plane of contact and a second reference point at the threaded groove relative to each other; determination of the position of a second entry point at the threaded groove based on the said measuring in.

The screw rod can in this way comprise a second end designed as a die end.

It is appropriate that the processing of workpiece be achieved to comprise a second section of assembly thread that demonstrates at least a second thread comprising a connection point that makes contact with the second plane of contact.

It is preferable that the processing of the workpiece take place to comprise a second section of assembly thread that demonstrates at least a second thread comprising a connection point that makes contact with the second plane of contact, the position of which is calculated by the control unit that considers the said measuring in of the second plane of contact and the second reference point at the threaded groove and that considers the said determination of the position of the second entry point at the threaded groove based on the said measuring in.

It is possible in this way for the second entry point of the die end for the threaded groove to be in accordance with the first entry point of the male end for the threaded groove for two joined screw rods after the assembly has been completed.

It is appropriate that the first and/or second section of assembly thread be achieved around one tap end and/or in one female end.

It is preferable that the step of processing the workpiece to comprise a first section of assembly thread that demonstrates at least a first thread comprising a first connection point that makes contact with the first plane of contact, in which the processing and the positioning of the first connection point are carried out by, for example, a control unit based on a pre-determined tightening torque.

It is appropriate that the step of processing the first section of assembly thread be achieved to comprise at least one transverse hole that extends transverse to the z-axis.

It is in this way possible that one or several tubular pins can secure against rotation an assembly of two screw rods with each other.

It is preferable that the processing comprise burring of the entry points of the threads and threaded grooves.

It is preferable that the method according to claims 1 to 7 be repeated for the manufacture of a further screw rod identical to the preceding screw rod that has been manufactured according to claims 1 to 7.

It is appropriate that the processing comprise output of the completed screw rod from, for example, a CNC machine to a collection bin.

At least one of the aims described above has been achieved through a processing configuration, according to claim 8, for the manufacture of screw rods, each of which extends along a z-axis, in which the processing configuration comprises: a feed unit arranged for the feed of a workpiece arranged with at least one thread groove or threaded groove at a gripper for the fastening of the workpiece; a positioning arrangement arranged such that it can be controlled to position a first processing tool for the processing of a first plane of contact at the workpiece extending transverse to the z-axis; the positioning arrangement is arranged such that can be controlled to position a sensor for the measuring in of the first plane of contact and a first reference point at the threaded groove; the positioning arrangement is arranged such that it can be controlled to position a second processing tool for the processing of a first section of assembly thread that demonstrates at least a first thread.

It is appropriate that the positioning arrangement be arranged such that it can be controlled to position by means of a control unit a first processing tool for the processing of a first plane of contact at the workpiece that extends transverse to the z-axis.

It is preferable that the positioning arrangement be arranged such that can be controlled to position by means of a control unit a sensor for the measuring in of the first plane of contact and a first reference point at the threaded groove. It is appropriate that the positioning arrangement be arranged such that it can be controlled by means of a control unit to position a second processing tool for the processing of a first section of assembly thread that demonstrates at least a first thread.

It is preferable that the sensor comprise a measurement probe and/or a laser device.

It is appropriate that the second processing tool comprise a thread cutting tool and/or a thread milling tool.

It is preferable that the positioning arrangement comprise a control unit arranged to control the first processing tool, the sensor and the second processing tool independently of each other.

At least one of the above-mentioned aims has been achieved through a multioperation machine comprising a processing configuration according to any one of claims 8 to 11.

It is appropriate that the multioperation machine be arranged for fully or partially automatic manufacture of screw rods.

At least one of the aims described above has been achieved through a computer program, according to claim 14, to be executed on a processing configuration for the manufacture of screw rods (screw joints), each of which extends along a z-axis, in which the processing configuration comprises: a feed unit arranged for the feed of a workpiece arranged with at least one thread groove or threaded groove at a gripper for the fastening of the workpiece; a positioning arrangement arranged such that it can be controlled to position a first processing tool for the processing of a first plane of contact at the workpiece that extends transverse to the z-axis; the positioning arrangement is arranged such that can be controlled to position a sensor for the measuring in of the first plane of contact and a first reference point at the threaded groove; the positioning arrangement is arranged such that it can be controlled to position a second processing tool for the processing of a first section of assembly thread that demonstrates at least a first thread, in which the computer program comprises program code stored on a medium that can be read by a computer, in order to carry out the method steps according to any one of claims 1 to 7 when the computer program is run on a control unit connected to the positioning arrangement.

It is in this way possible to achieve all screw rods in a module system, in which all screw rods can be manufactured in a cost-efficient manner to fit each other without each screw rod needing to demonstrate a unique ID-labelling for unique adaptation.

Cost-efficient manufacture that saves time is in this way achieved.

It is in this way possible to manufacture screw rods in advance of use since all joints always fit each other, whereby a manufacturer no longer needs to wait for an order for tailored lengths.

Cost-efficient transport is in this way achieved since short screw rods can be advantageously manufactured in an efficient manner in large batches and can be transported in a less bulky manner.

Simple handling during manufacture, during transport and during assembly is in this way achieved.

The risk of assembly and transport damage is in this way reduced.

The possibility to exchange a screw rod that may have been damaged is in this way obtained, as a consequence of all screw rods being able to be applied for a modular system by means of the present method, where all screw rods of a certain length are identical. Thus, all sections of screw rod fit each other independently of the module length.

The term "mean diameter of the threaded groove" is used to denote the diameter when taken transverse to the z-direction and in a cross-section transversely through the longitudinal direction in the z-direction of the section of screw rod. The mean diameter is smaller than the maximum diameter of the section of screw rod and it is larger than the lowest diameter of the threaded groove when seen transverse to the z-direction.

The term "plane of rotation (c-axis) of the gripper" is used to denote a rotation around the z-axis.

It is preferable that the multioperation machine comprise one positioning arrangement, or two or more positioning arrangements.

The female end can also be denoted by the term "die end".

The tap end can also be denoted by the term "male end".

### SUMMARY OF DRAWINGS

The invention will now be explained with reference to the drawings, of which schematically:
Figures 1a to 1b show a modular system of sections of screw rod that have been manufactured according to a first example of the invention;
Figures 2a to 2c show two similar sections of screw rod that have been manufactured according to a second example of the invention and that have been assembled to each other;
Figure 3 shows a third example of a screw rod that has been manufactured according to the invention and that has been manufactured according to one aspect;
Figures 4a to 4g show different aspects of and a fourth example of sections of screw rods that have been manufactured according to the invention;
Figure 5 shows a fifth example of sections of screw rod that have been manufactured according to the invention and that have been manufactured according to one aspect;
Figure 6 shows a multioperation machine according to one example of the invention for the manufacture of sections of screw rods for a modular system;
Figure 7 shows a flow diagram of a method to manufacture sections of screw rod according to one aspect of the invention;
Figure 8 shows a flow diagram of a method to manufacture sections of screw rod according to a further aspect of the invention; and
Figure 9 shows a control unit used in the machine according to the invention.

### DETAILED DESCRIPTION OF EMBODIMENTS

The invention will now be explained with the aid of examples. Items in the schematic drawings may be present depicting the same type of item but in different drawings, with the same reference numbers. The drawings are not to be interpreted strictly, and details that do not have significance for the invention have been omitted from them, for reasons of clarity. Reference points illustrated in the drawings are depicted for the purpose of explanation and are in some cases imaginary.

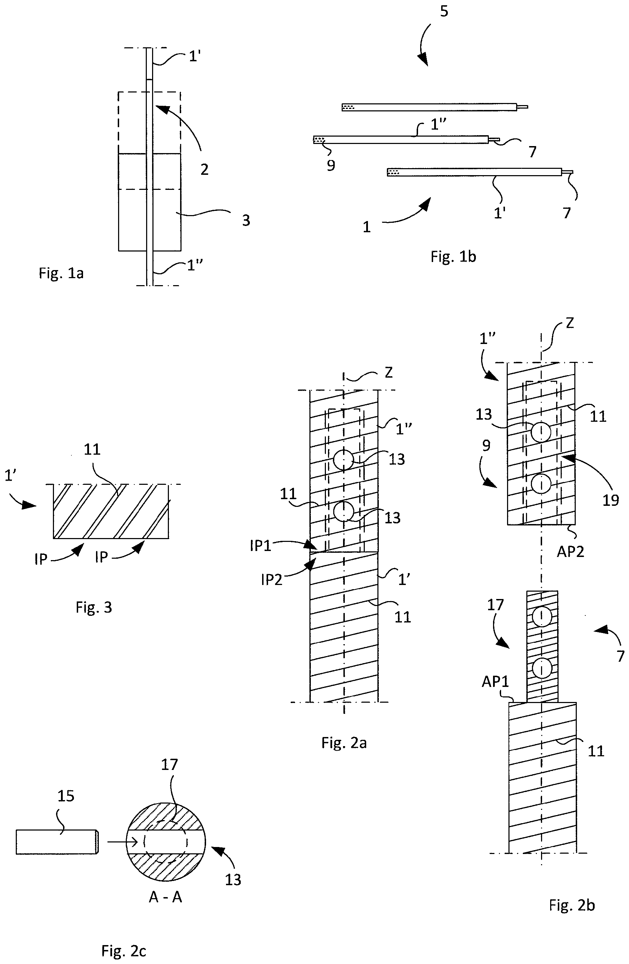

Figure 1a presents sections of screw rod 1',1" joined to each other, shown in

Figure 1b to form an extended screw 2. A screw-driven lift 3 is arranged at the screw 2 and is driven by the same. Figure 1b shows a modular set 5 of sections of screw rod 1',1" according to a first embodiment. Each section of screw rod 1',1" demonstrates a tap end 7 and a female end 9. A first section of screw rod 1' is mounted with its tap end 7 at the female end 9 of a second section of screw rod 1".

Figures 2a to 2c show two similar sections of screw rod 1',1" extending along a z-axis that have been manufactured according to a second example of the invention and that have been assembled to each other. Each section of screw rod 1',1" demonstrates a threaded groove 11. Figure 2a shows a completed assembly of the first section of screw rod 1' to the second section of screw rod 1", in which a first entry point IP1 for the threaded groove 11 at the first section of screw rod 1' fits a second entry point IP2 for the threaded groove 11 at the second section of screw rod 1". In the same way, transverse holes 13 are present at each tap end 7 and the relevant female end 9, aligned with each other for locking with the aid of tubular pins 15, for the locking of the assembly against rotation. A first section of assembly thread 17 at the tap end 7 at the first section of screw rod 1' comprises a freely chosen thread profile, for example a metric thread, that is compatible with a thread at a second section of assembly thread 19 at the female end 9 of a neighbouring second section of screw rod 1". When the assembly is complete, a first plane of contact AP1 at the first screw rod 1' comes into contact with a second plane of contact AP2 at the second section of screw rod 1" as is made clear by Figure 2b. Figure 2c shows a cross-section of the screw joint in Figure 2a, demonstrating a transverse hole 13 and the tubular pin 15.

Figure 3 shows a third example of the section of screw rod 1' that has been manufactured according to the invention and that has been manufactured according to one aspect, in which each section of screw rod 1' has been provided with several threaded grooves 11, each end of a section of screw rod in this way demonstrating several entry points to threaded grooves, each of them comprising a well-defined entry point IP determined relative to the relevant section of assembly thread (not shown in the drawings) at each section of screw rod 1'.

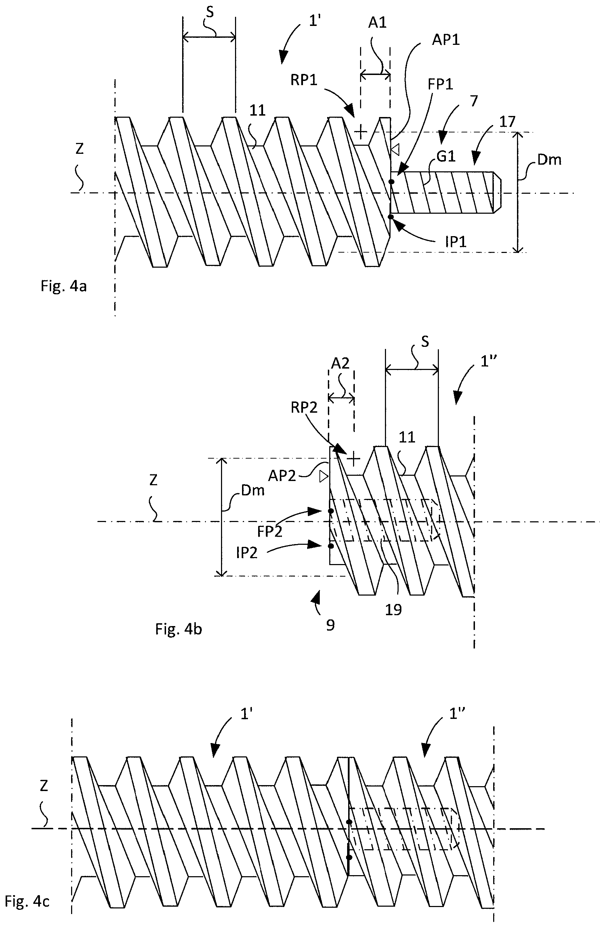

Figures 4a to 4c show a fourth example of sections of screw rod 1',1" that have been manufactured according to the invention and that have been manufactured according to one aspect. A first section of screw rod 1' is shown with its tap end 7 in Figure 4a, and a second section of screw rod 1" with its female end 9 in Figure 4b. The sections of screw rod 1', 1" are manufactured in a multioperation machine (not shown in the drawings). Algorithms are arranged at a control unit (not shown in the drawings) at a multioperation machine for the measuring in of the orientation of a threaded groove 11 relative to first and second planes of contact AP1, AP2 that extend transverse to the longitudinal direction of the sections of screw rod 1', 1" along a z-axis. A workpiece comprising the threaded groove 11 is processed at one of its ends to the plane of contact AP1. The method for manufacture of the sections of screw rod 1', 1" that extend along the z-axis comprises the steps of processing the workpiece that demonstrates at least one threaded groove 11 in this example.

After this, measuring in of the first plane of contact AP1 and a first reference point RP1 at the threaded groove 11 relative to each other takes place, and a first distance A1 is determined, in which data concerning the measuring in are fed to the control unit.

The control unit has been prepared to take into consideration through an algorithm the data with respect to the pitch S of the threaded groove 11 and the mean diameter Dm of the threaded groove 11 that have been input in order to determine the position of a first entry point IP1 at the threaded groove 11 based on the measuring in of the first plane of contact AP1 and the first reference point RP1.

When the position IP1 of the first entry point has been determined by the control unit, the said control unit calculates the position for a first connection point FP1 at a first thread G1 at a first section of assembly thread 17 relative to the first entry point IP1 and it takes into consideration a pre-determined tightening torque and compensates the positioning of the connection point FP1 through rotation of the workpiece in the rotational plane C of the workpiece around the z-axis in a direction of rotation that is opposite to the direction of rotation of the tightening torque.

This calculation is carried out such that during the assembly of the section of screw rod 1' to a second freely chosen section of screw rod 1" (manufactured with this method of measuring in and this algorithm), there is always achieved satisfactory and exact connection with respect to entry points of the grooves and connection points and transverse holes, since the first entry point IP1 at the first section of assembly thread 17 at the first section of screw rod 1' will always be compatible with a second entry point IP2 at a second section of assembly thread 19 at the second section of screw rod 1" that has been mounted.

After this, the processing of the workpiece continues through the design of the first section of assembly thread 17 demonstrating at least the first thread G1 comprising the first connection point FP1 that is in connection with the first plane of contact AP1.

Figure 4b displays the female end 9 of the second section of screw rod 1". The same procedure for the female end 9 as for the tap end 7 is carried out during measuring in, in order to find a second reference point RP2. The control unit has been prepared to take into consideration through an algorithm the data with respect to the pitch S of the threaded groove 11 and the mean diameter Dm of the threaded groove 11 that have been input in order to determine the position of a second entry point IP2 at the threaded groove based on the measuring in of the second plane of contact AP2 and the second reference point RP2. The processing of the workpiece forms the second plane of contact AP2 that extends transverse to the z-axis. Measuring in of the second plane of contact AP2 and a second reference point RP2 at the threaded groove 11 subsequently takes place and the values are determined relative to each other with the aid of the algorithm of the control unit. The position of the second entry point IP2 at the threaded groove 11 is subsequently determined, based on the said measuring in operation. Figure 4c shows two sections of screw rod 1', 1" that have been assembled together.

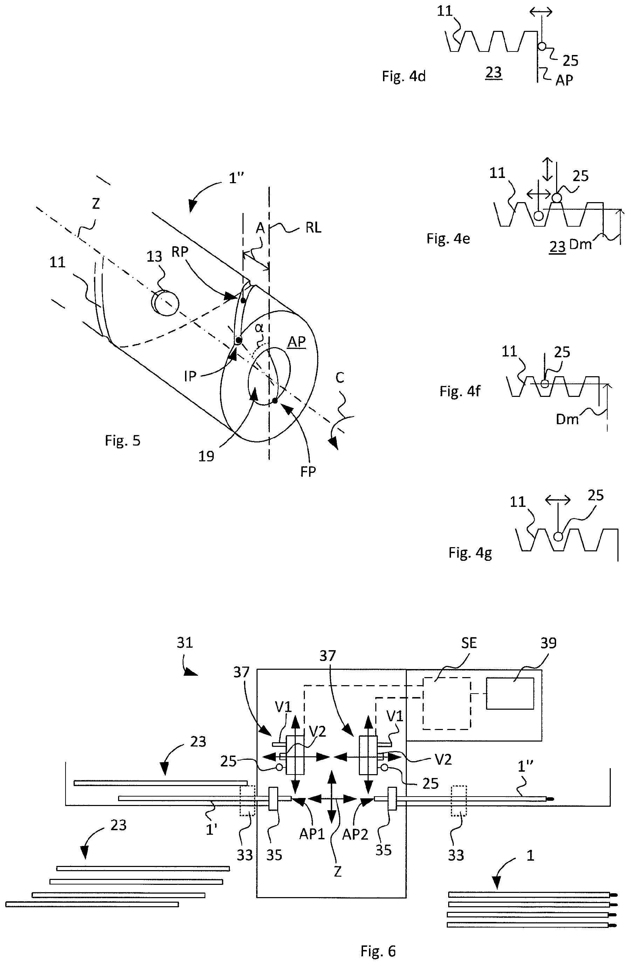

Example of measuring in:
According to one example, the processing and measuring in are carried out completely in a CNC machine, where all workpieces demonstrate the same thread and are compatible with each other independently of the module length. The measuring is carried out with, for example, a mechanical sensor and/or a laser measurement device.
Step 1: An extended partially fabricated screw rod (the workpiece 23) is fed into the CNC machine from a feed magazine (that it is possible to charge with a set of screw rods as workpieces) and is processed at one end with an appropriate adjustment, together with an external diameter for an appropriate thread.
Step 2: A sensor 25 (for example, a measurement probe) is switched into position in the CNC machine and carries out measuring in of the workpiece 23 and the position of the plane of contact AP (Figure 4d).
   a) It is preferable that the sensor 25 be displaced with the aid of the positioning arrangement in a primary search to the smaller diameter (such as 34 mm) of the threaded groove 11 than the final measured in diameter of the threaded groove 11 that corresponds to the mean diameter Dm. It is in this way determined that the sensor 25 moves freely during the measuring in of the mean diameter Dm, since the width of the threaded groove 11 increases as the diameter increases (Figure 4e).
   b) It is preferable that the threaded groove 11 be displaced by rotation of the gripper through an angle of rotation in the plane of rotation of the gripper (the c-axis) in the case in which the sensor 25 does not reach a position for the measuring in of the smaller diameter of the threaded groove 11.
   c) It is appropriate that the angle of rotation be 40 degrees or another angle of rotation, depending on the pitch S of the threaded groove 11.
   d) It is preferable that the second measuring in of the reference point at the threaded groove 11 be carried out with the aid of a secondary search that essentially corresponds to the primary search, with, however, half of the angle of rotation. It is appropriate that the halved angle of rotation correspond to 20 degrees.
   e) It is appropriate that a first value for the smaller diameter be determined during the primary search and a second value during the second search.
   f) It is preferable that the positioning arrangement be controlled such that it positions the sensor 25 at a position centrally between the first and the second values. A continued determination of the measurement macro routine is in this way achieved, when both the primary and the secondary searches have achieved an approved depth of diameter for the smaller diameter of the threaded groove 11.
   g) It is appropriate that the sensor 25 be subsequently positioned at the position of the mean diameter Dm (Figure 4f).
   h) It is preferable that the gripper be rotated through a positive angle of rotation in the plane of rotation of the gripper until the sensor 25 indicates the position of the first flank of the threaded groove 11 at the level of the mean diameter Dm.
   i) It is preferable that the gripper be subsequently rotated through a negative angle of rotation in the plane of rotation of the gripper until the sensor 25 indicates the position of the second flank of the threaded groove 11 at the level of the mean diameter Dm. A value for the absolute thread centre of the threaded groove 11 can in this way be obtained.
   j) It is appropriate that the value for the absolute thread centre of the threaded groove 11 be stored on a medium that can be read at the control unit at the CNC machine. The orientation and position of the threaded groove 11 relative to the coordinate system of the CNC machine in the plane of rotation (c-axis) of the gripper are in this way determined.
   k) It is preferable that the zero value of the plane of rotation (c-axis) of the gripper be calculated, with the aid of the values obtained during the primary and secondary searches.
   l) It is preferable furthermore that the values to which the workpiece is to be rotated for further processing be calculated, with the aid of the values obtained during the primary and secondary searches.
   m) It is appropriate that the calculation take place by means of the macro values and variable values obtained. Alternatively, the sensor 25 is positioned at positions along the direction of the z-axis (Figure 4g) as a control measurement of the orientation of the threaded groove 11 relative to the coordinate system of the CNC machine. It is preferable that the sensor 25 be positioned at search positions along the direction of the z-axis at a distance from the positioning of the sensor 25 during the first and second measuring in operations, which distance from the plane of contact AP is greater than the distance measured during the first and second measuring in operations.
   n) It is appropriate that the sensor 25 move based on the calculated value for the position of the c-axis to a position of the mean diameter, and search for left and right flanks of the threaded groove 11 solely by displacement of the sensor along the z-axis.
   o) It is preferable that the measuring in of the right and left flanks of the threaded groove 11 be repeated by displacement of the sensor 25 along the z-axis.

Figure 5 shows in perspective the measuring in of reference point RP, the determination of the position of the entry point IP based on the relevant pitch S of the threaded groove 11 and the mean diameter Dm of the threaded groove 11, and the value for the connection point FP that has been determined. When the connection point FP has been determined in this way for the sections of assembly thread, the correct connection of the threaded grooves 11 at two sections of screw rod 1',1" assembled with each other is in this way determined. Also drilling operations for transverse holes 13 in the tap end 7 and the female end 9 will come to be aligned with each other after the correct screwing together, since the first entry point (for a first section of screw rod) and the second entry point (for a second section of screw rod) are in contact.

An angle α can, for example, be determined for the position of the entry point IP relative to a reference line RL, from which a distance A in the z-direction has been measured. Based on this reference line RL, an angular value for the desired position at the connection point FP at the section of assembly thread 19 is subsequently calculated.

Figure 6 shows a multioperation machine 31 according to one example of the invention for the manufacture of sections of screw rod (screw joints) intended for a modular system. The multioperation machine 31 comprises a processing configuration for the manufacture of sections of screw rod 1', 1", each one of which extending along a z-axis.

The multioperation machine 31 is arranged for fully or partially automatic manufacture of sections of screw rod 1', 1". The processing configuration comprises: a feed unit 33 arranged for the feed of a workpiece 23 arranged with at least one threaded groove (not shown in the drawings) at a gripper 35 (such as a chuck and/or a clamping sleeve) for the fastening of the workpiece 23; a positioning arrangement 37 arranged such that it can be controlled through a control unit SE to position a first processing tool V1 for the processing of a first plane of contact AP1 at the workpiece 23 extending transverse to the z-axis; the positioning arrangement 37 is arranged such that can be controlled through the control unit SE to position a sensor 25 for the measuring in of the first plane of contact AP1 and a first reference point (not shown in the drawings) at the threaded groove; the positioning arrangement 37 is arranged such that it can be controlled through the control unit SE to position a second processing tool V2 for the processing of a first section of assembly thread (not shown in the drawings) that demonstrates at least one first thread (not shown in the drawings).

The positioning arrangement 37 is controlled by the control unit SE connected to a display 39 that an operator (not shown in the drawings) uses to set the parameters desired. The positioning arrangement 37 may be a tool carousel comprising the said sensor 25 comprising a measurement probe and/or a laser probe. The first processing tool V1 may be a lathe cutting tool, and the second processing tool V2 may be a thread cutting tool and/or a thread milling tool in order to achieve the said section of assembly thread.

The multioperation machine may comprise one or several positioning arrangements (tool carousels).

The tool carousel may thus comprise measurement probes and/or laser probes and thread cutting tools and/or thread milling tools that are alternately switched into position to be used for measuring in and processing.

The positioning arrangement 37 is connected to the control unit SE, which is arranged to control the first processing tool V1, the sensor 25 and the second processing tool V2 independently of each other. The control unit SE provides control of the output of completed sections of threaded rod 1 ready for delivery according to a modular system.

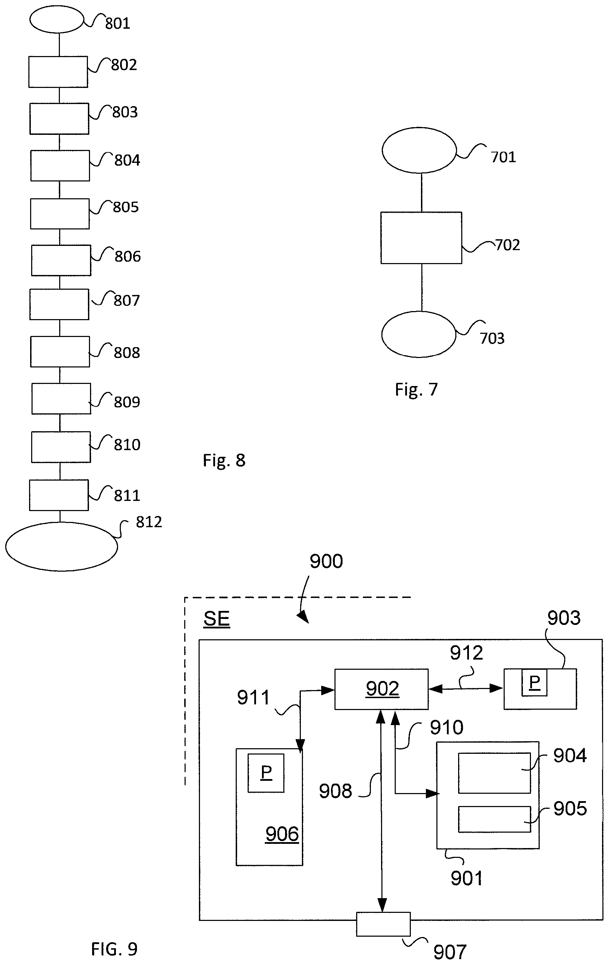

Figure 7 shows a schematic flow diagram of a method to manufacture sections of screw rod according to one aspect of the invention. The method shown in Figure 7 illustrates a first step 701 that comprises the start of the method. A second step 702 illustrates the method of manufacturing a section of screw rod that extends along a z-axis. A third step 703 illustrates the end of the method. The second step 702 can comprise the steps: processing of a workpiece to comprise at least one threaded groove; processing of the workpiece to comprise a first plane of contact AP1 that extends transverse to the z-axis; measuring in of the first plane of contact AP1 and a first reference point RP1 at the threaded groove relative to each other; determination of the position of a first entry point IP1 at the threaded groove based on the said measuring in; processing of the workpiece to comprise a first section of assembly thread that demonstrates at least a first thread comprising a first connection point FP1 that is connected at the first plane of contact AP1.

Figure 8 shows a flow diagram of a second method to manufacture sections of screw rod according to one aspect of the invention. The method shown in Figure 8 illustrates a first step 801 that comprises the start of the method. A second step 802 comprises the processing of a workpiece to comprise at least one threaded groove. A third step 803 comprises the processing of the workpiece to comprise a first plane of contact AP1 extending transverse to the z-axis. A fourth step 804 comprises measuring in of the first plane of contact AP1 and a first reference point RP1 at the threaded groove relative to each other. A fifth step 805 comprises the determination of the position of a first entry point IP1 at the threaded groove based on the said measuring in. A sixth step 806 comprises the processing of the workpiece to comprise a first section of assembly thread demonstrating at least one first thread comprising a connection point FP1 in connection with the first plane of contact AP1. A seventh step 807 comprises the processing of the workpiece to comprise a second plane of contact AP2 extending transverse to the z-axis. An eighth step 808 comprises the measuring in of the second plane of contact AP2 and a second reference point RP2 at the threaded groove relative to each other. A ninth step 809 comprises the determination of the position of a second entry point IP2 at the threaded groove based on the said measuring in. A tenth step 810 comprises the processing of the workpiece to comprise a second section of assembly thread that demonstrates at least one second thread comprising a connection point FP2 that makes contact with the second plane of contact AP2. An eleventh step 811 comprises the drilling of transverse holes. A twelfth step 812 illustrates the end of the method.

A further example of the method according to the invention comprises, in addition to the methods given as examples and described above, also the processing of the workpiece to comprise a first section of assembly thread that demonstrates at least a first thread comprising a first connection point FP1 that makes contact with the first plane of contact AP1, in which the processing and the positioning of the first connection point FP1 are carried out based on a pre-determined tightening torque. The method according to this example comprises also processing of the workpiece to comprise a second section of assembly thread that demonstrates at least one second thread comprising a second connection point FP2 that makes contact with the second plane of contact AP2, in which the processing and the positioning of the second connection point FP2 are carried out based on a pre-determined tightening torque.

Figure 9 illustrates a control unit SE used in the machine according to one embodiment of the invention. The control unit SE described in Figure 6 comprises, for example, according to this embodiment, a data processing arrangement 900. The data processing arrangement 900 comprises a non-transient memory 901, a data processing unit 902 and a read/write memory 903. The non-transient memory 901 demonstrates a first memory part 904, in which a computer program, such as an operating system, is stored in order to control the function of the data processing arrangement 900. Furthermore, the data processing arrangement 900 comprises a bus controller, a serial communication port, I/O means, an A/D converter, a unit to input and transfer the time and date, an event counter and an interrupt controller (not shown in the drawing). The non-transient memory 901 demonstrates also a second memory part 905.

A computer program P is configured to comprise routines to provide a method for the manufacture of a screw rod that extends along a z-axis according to one example, in which the method comprises the steps: processing of a workpiece to comprise at least one threaded groove; processing of the workpiece to comprise a first plane of contact AP1 that extends transverse to the z-axis; measuring in of the first plane of contact AP1 and a first reference point RP1 at the threaded groove relative to each other; determination of the position of a first entry point IP1 at the threaded groove based on the said measuring in; processing of the workpiece to comprise a first section of assembly thread that demonstrates at least a first thread comprising a first connection point FP1 that is connected at the first plane of contact AP1.

The program P comprises routines to position, measure, process workpieces in series. The program P comprises also routines for the feed and fastening of workpieces, and for the calculation of a connection point compensated for tightening torque. In this embodiment the program P is stored in a manner that allows it to be executed or in a compressed manner in a memory and/or in a read/write memory.

When it is described that the data processing unit 902 carries out a certain function, it is to be understood that the data processing unit 902 can carry out a certain part of the program P, which is stored in the memory 906, or a certain part of the program P that is stored in the read/write memory 903. The data processing arrangement 900 can communicate with a data port 907 over a data bus 908. The non-transient memory 901 is intended for communication with the data processing unit 902 over a data bus 910. The separate memory 906 is intended to communicate with the data processing unit 902 over a data bus 911. In the same way, the read/write memory 903 is arranged to communicate with the data processing unit 902 over a data bus 912. A link may be connected to the data port 907 and connected to a positioning arrangement 37 comprising a sensor 25.

When data are received on the data port 907, they are stored temporarily in the second memory part 905. When input data that have been received have been temporarily stored, the data processing unit 902 is prepared such that it can carry out execution of code in a manner that has been described above. According to one execution, signals received at the data port 907 comprise information about the current positions of the positioning arrangement 37 and the sensor 25.

According to one execution, signals received on the data port 907 comprise information about completed positioning and/or measuring in and/or input of the parameters desired. The said information can be measured in with the aid of the said sensor 25 or input to the control unit SE manually. The signals received on the data port 907 can be used by the data processing arrangement 900 to control and position the positioning arrangement 37 and based on the current measured in values concerning the current position of the sensor 25 relative to the threaded groove 11. Parts of the methods that are described in this document are carried out by the data processing arrangement 900 with the aid of the data processing unit 902 that runs the program P stored in the memory or in the read/write memory, and when the data processing arrangement 900 runs the said programme P, the said method or methods is or are executed.

The invention is not limited to the examples described above. There are several different modifications and combinations of examples that are obvious for one skilled in the arts operating within the technological field to apply within the scope of the invention as defined by the claims.

## Claims

1. A method for the manufacture of a section of screw rod (1', 1") extending along a z-axis (Z), the method comprises the steps:
- the processing of a workpiece (23) to comprise at least one thread groove (11);
- the processing of the workpiece (23) to comprise a first plane of contact (AP1) that extends transverse to the z-axis (Z); **the method is characterized by;**
- the measuring in of the first plane of contact (AP1) and a first reference point (RP1) at the thread groove (11) relative to each other;
- the determination of a position of a first entry point (IP1) at the thread groove (11) based on the said measuring in;
- the processing of the workpiece (23) to comprise a first section of assembly thread (17) demonstrating at least one first thread comprising a connection point (FP1) in connection with the first plane of contact (AP1).

2. The method according to claim 1, **in which** the measuring in is carried out with a mechanical sensor (25) and/or a laser measurement device.

3. The method according to any one of claims 1-2, **comprising the steps:**
- the processing of the workpiece (23) to comprise a second plane of contact (AP2) that extends transverse to the z-axis (Z);
- the measuring in of the second plane of contact (AP2) and a second reference point (RP2) at the thread groove (11) relative to each other;
- the determination of a position of a second entry point (IP2) at the thread groove (11) based on the said measuring in.

4. The method according to claim 3, **comprising the step:** processing of the workpiece (23) to comprise a second section of assembly thread (19) that demonstrates at least one second thread comprising a connection point (FP2) that makes contact with the second plane of contact (AP2).

5. The method according to any one of the preceding claims, **in which** the first (17) and/or second (19) section of assembly thread is achieved around a tap end (7) and/or in a female end (9).

6. The method according to any one of the preceding claims, in which the step of processing the workpiece (23) to comprise a first section of assembly thread (17) that demonstrates at least a first thread comprising a first connection point (FP1) that makes contact with the first plane of contact (AP1), in which the processing and the positioning of the first connection point (FP1) are carried out based on a pre-determined tightening torque.

7. The method according to any one of the preceding claims, comprising the step:
- the processing of the first section of assembly thread (17) to comprise at least one transverse hole (13) that extends transverse to the z-axis (Z).

8. A processing configuration for the manufacture of sections of screw rod (1', 1"), each one of which extends along a z-axis (Z), in which the processing configuration comprises:
- a feed unit (33) arranged for the feed of a workpiece (23) arranged with at least one thread groove (11) to a gripper (35) for the fastening of the workpiece (23);
- a positioning arrangement (37) arranged such that it can be controlled to position a first processing tool (V1) for the processing of a first plane of contact (AP1) at the workpiece extending transverse to the z-axis (Z); **characterized in that**:
- the positioning arrangement (37) is arranged such that it can be
controlled to position a sensor (25) for the measuring in of the first plane of contact (AP1) and a first reference point (RP1) at the thread groove (11);
- the positioning arrangement (37) is arranged such that it can be controlled to position a second processing tool (V2) for the processing of a first section of assembly thread (17) that demonstrates at least a first thread.

9. The processing configuration according to claim 8, **in which** the sensor (25) comprises a measurement probe.

10. The processing configuration according to claim 8 or 9, **in which** the second processing tool (V2) comprises a thread cutting tool and/or a thread milling tool.

11. The processing configuration according to any one of claims 8 to 10, in which the positioning arrangement (37) is connected to a control unit (SE) arranged to control the first processing tool (V1), the sensor (25) and the second processing tool (V2) independently of each other.

12. A multioperation machine (31) comprising a processing configuration according to any one of claims 8 to 11.

13. The multioperation machine (31) according to claim 12, in which the multioperation machine is arranged for fully or partially automatic manufacture of sections of screw rod (1', 1").

14. A computer program (P) to be executed on a processing configuration for the manufacture of sections of screw rod (1', 1"), each one of which extends along a z-axis (Z), **in which** the processing configuration comprises:
- a feed unit (33) arranged for the feed of a workpiece (23) arranged with at least one thread groove (11) to a gripper (35) for the fastening of the workpiece (23); and
- a positioning arrangement (37) arranged such that it can be controlled to position a first processing tool (V1) for the processing of a first plane of contact (AP1) at the workpiece extending transverse to the z-axis (Z);
**characterized in that**
- the positioning arrangement (37) is arranged such that it can be
controlled to position a sensor (25) for the measuring in of the first plane of contact (AP1) and a first reference point (RP1) at the thread groove (11);
- the positioning arrangement (37) is arranged such that it can be controlled to position a second processing tool (V2) for the processing of a first section of assembly thread (17) that demonstrates at least a first thread, **in which** the computer program (P) comprises a program code stored on a medium that can be read by a computer in order to carry out the method steps according to any one of claims 1 to 7 when the computer program (P) is run on a control unit (SE) connected to the positioning arrangement (37).

## Patentansprüche

1. Verfahren zur Herstellung eines Abschnitts eines Schraubenstabs (1', 1"), der sich entlang einer Z-Achse (Z) erstreckt, wobei das Verfahren die folgenden Schritte umfasst:
- das Bearbeiten eines Werkstücks (23), um mindestens eine Gewindenut (11) zu umfassen;
- das Bearbeiten des Werkstücks (23), um eine erste Kontaktebene (AP1) zu umfassen, die sich quer zur Z-Achse (Z) erstreckt; wobei das Verfahren **gekennzeichnet ist durch**
- das Messen der ersten Kontaktebene (AP1) und eines ersten Bezugspunktes (RP1) an der Gewindenut (11) relativ zueinander;
- das Bestimmen einer Position eines ersten Eingangspunktes (IP1) an der Gewindenut (11) basierend auf dem Messen;
- das Bearbeiten des Werkstücks (23), um einen ersten Abschnitt eines Montagegewindes (17) zu umfassen, der mindestens ein erstes Gewinde umfassend einen Verbindungspunkt (FP1) in Verbindung mit der ersten Kontaktebene (AP1) zeigt.

2. Verfahren nach Anspruch 1, wobei das Messen mit einem mechanischen Sensor (25) und/oder einer Lasermesseinrichtung ausgeführt wird.

3. Verfahren nach einem der Ansprüche 1-2, umfassend die folgenden Schritte:
- das Bearbeiten des Werkstücks (23), um eine zweite Kontaktebene (AP2) zu umfassen, die sich quer zur Z-Achse (Z) erstreckt;
- das Messen der zweiten Kontaktebene (AP2) und eines zweiten Bezugspunktes (RP2) an der Gewindenut (11) relativ zueinander;
- das Bestimmen einer Position eines zweiten Eingangspunktes (IP2) an der Gewindenut (11) basierend auf dem Messen.

4. Verfahren nach Anspruch 3, umfassend den folgenden Schritt: Bearbeiten des Werkstücks (23), um einen zweiten Abschnitt eines Montagegewindes (19) zu umfassen, der mindestens ein zweites Gewinde zeigt, das einen Verbindungspunkt (FP2) umfasst, der einen Kontakt mit der zweiten Kontaktebene (AP2) herstellt.

5. Verfahren nach einem der vorgehenden Ansprüche, wobei der erste (17) und/oder zweite (19) Abschnitt von Montagegewinde um ein Schneiderende (7) herum und/oder in einem Innengewinde (9) erhalten wird.

6. Verfahren nach einem der vorgehenden Ansprüche, wobei der Schritt des Bearbeitens des Werkstücks (23), um einen ersten Abschnitt von Montagegewinde (17) zu umfassen, der mindestens ein erstes Gewinde zeigt, einen ersten Verbindungspunkt (FP1) umfasst, der einen Kontakt mit der ersten Kontaktebene (AP1) herstellt, wobei das Bearbeiten und das Positionieren des ersten Verbindungspunktes (FP1) basierend auf einem vorbestimmten Anzugsdrehmoment ausgeführt werden.

7. Verfahren nach einem der vorhergehenden Ansprüche, umfassend den folgenden Schritt:
- das Bearbeiten des ersten Abschnitts von Montagegewinde (17), um mindestens ein Querloch (13) zu umfassen, das sich quer zur Z-Achse (Z) erstreckt.

8. Bearbeitungskonfiguration zur Herstellung von Abschnitten eines Schraubenstabs (1', 1"), wovon jeder sich entlang einer Z-Achse (Z) erstreckt, wobei die Bearbeitungskonfiguration Folgendes umfasst:
- eine Zuführeinheit (33), die für das Zuführen eines Werkstücks (23) ausgelegt und mit mindestens einer Gewindenut (11) an einem Greifer (35) zur Befestigung des Werkstücks (23) angeordnet ist;
- eine Positionierungsanordnung (37), die derart ausgelegt ist, dass sie dazu gesteuert werden kann, ein erstes Bearbeitungswerkzeug (V1) zum Bearbeiten einer ersten Kontaktebene (AP1) am quer zur Z-Achse (Z) sich erstreckenden Werkstück zu positionieren; **dadurch gekennzeichnet, dass:**
- die Positionierungsanordnung (37) derart ausgelegt ist, dass sie dazu gesteuert werden kann, einen Sensor (25) zum Messen der ersten Kontaktebene (AP1) und eines ersten Bezugspunktes (RP1) an der Gewindenut (11) zu positionieren;
- die Positionierungsanordnung (37) derart ausgelegt ist, dass sie dazu gesteuert werden kann, ein zweites Bearbeitungswerkzeug (V2) zum Bearbeiten eines ersten Abschnitts von Montagegewinde (17) zu positionieren, das zumindest ein erstes Gewinde zeigt.

9. Bearbeitungskonfiguration nach Anspruch 8, wobei der Sensor (25) eine Messsonde umfasst.

10. Bearbeitungskonfiguration nach Anspruch 8 oder 9, wobei das zweite Bearbeitungswerkzeug (V2) ein Gewindeschneidwerkzeug und/oder ein Gewindefräswerkzeug umfasst.

11. Bearbeitungskonfiguration nach einem der Ansprüche 8 bis 10, bei der die Positionierungsanordnung (37) mit einer Steuereinheit (SE) verbunden ist, die zum Steuern des ersten Bearbeitungswerkzeugs (V1), des Sensors (25) und des zweiten Bearbeitungswerkzeugs (V2) unabhängig voneinander ausgelegt ist.

12. Komplettbearbeitungsmaschine (31) umfassend eine Bearbeitungskonfiguration nach einem der Ansprüche 8 bis 11.

13. Komplettbearbeitungsmaschine (31) nach Anspruch 12, wobei die Komplettbearbeitungsmaschine zur vollständigen oder teilweisen automatischen Herstellung von Abschnitten eines Schraubenstabs (1', 1") ausgelegt ist.

14. Computerprogramm (P) zum Ausführen an einer Bearbeitungskonfiguration zur Herstellung von Abschnitten eines Schraubenstabs (1', 1"), wovon jeder sich entlang einer Z-Achse (Z) erstreckt, wobei die Bearbeitungskonfiguration Folgendes umfasst:
- eine Zuführeinheit (33), die für das Zuführen eines Werkstücks (23) ausgelegt und mit mindestens einer Gewindenut (11) an einem Greifer (35) zur Befestigung des Werkstücks (23) ausgestattet ist; und
- eine Positionierungsanordnung (37), die derart ausgelegt ist, dass sie dazu gesteuert werden kann, ein erstes Bearbeitungswerkzeug (V1) zum Bearbeiten einer ersten Kontaktebene (AP1) am quer zur Z-Achse (Z) sich erstreckenden Werkstück zu positionieren;
**dadurch gekennzeichnet, dass**
- die Positionierungsanordnung (37) derart ausgelegt ist, dass sie dazu gesteuert werden kann, einen Sensor (25) zum Messen der ersten Kontaktebene (AP1) und eines ersten Bezugspunktes (RP1) an der Gewindenut (11) zu positionieren;
- die Positionierungsanordnung (37) derart ausgelegt ist, dass sie dazu gesteuert werden kann, ein zweites Bearbeitungswerkzeug (V2) zum Bearbeiten eines ersten Abschnitts von Montagegewinde (17) zu positionieren, der zumindest ein erstes Gewinde zeigt, wobei das Computerprogramm (P) einen Programmcode umfasst, der auf einem computerlesbaren Medium gespeichert ist, um die Verfahrensschritte nach einem der Ansprüche 1 bis 7 auszuführen, wenn das Computerprogramm (P) auf einer mit der Positionierungsanordnung (37) verbundenen Steuereinheit (SE) ausgeführt wird.

## Revendications

1. Procédé de fabrication d'un tronçon de tige filetée (1', 1") s'étendant le long d'un axe z (Z), le procédé comprenant les étapes :
- du traitement d'une pièce (23) pour comprendre au moins une rainure filetée (11) ;
- du traitement de la pièce (23) pour comprendre un premier plan de contact (AP1) qui s'étend transversalement à l'axe z (Z) ; le procédé étant **caractérisé par**
- la mesure du premier plan de contact (AP1) et d'un premier point de référence (RP1) au niveau de la rainure filetée (11) l'un par rapport à l'autre ;
- la détermination d'une position d'un premier point d'entrée (IP1) au niveau de la gorge filetée (11) sur la base de ladite mesure ;
- le traitement de la pièce (23) pour comprendre un premier tronçon de fil d'assemblage (17) faisant apparaître au moins un premier fil comportant un point de raccordement (FP1) en liaison avec le premier plan de contact (AP1).

2. Procédé selon la revendication 1, **dans lequel** la mesure est effectuée avec un capteur mécanique (25) et / ou un dispositif de mesure laser.

3. Procédé selon l'une quelconque des revendications 1 à 2, **comprenant les étapes** :
- du traitement de la pièce (23) pour comprendre un deuxième plan de contact (AP2) qui s'étend transversalement à l'axe z (Z) ;
- la mesure du deuxième plan de contact (AP2) et d'un deuxième point de référence (RP2) au niveau de la rainure filetée (11) l'un par rapport à l'autre ;
- la détermination d'une position d'un deuxième point d'entrée (IP2) au niveau de la gorge filetée (11) sur la base de ladite mesure.

4. Procédé selon la revendication 3, **comprenant l'étape** : du traitement de la pièce (23) pour comprendre un deuxième tronçon de fil d'assemblage (19) faisant apparaître au moins un deuxième fil comportant un point de raccordement (FP2) qui entre en contact avec le deuxième plan de contact (AP2).

5. Procédé selon l'une quelconque des revendications précédentes, **dans lequel** le premier (17) et / ou deuxième (19) tronçon de filetage d'assemblage est réalisé autour d'un embout taraudé (7) et / ou dans un embout femelle (9).

6. Procédé selon l'une quelconque des revendications précédentes, dans lequel l'étape de traitement de la pièce (23) pour comprendre un premier tronçon de fil d'assemblage (17) faisant apparaître au moins un premier fil comprenant un premier point de raccordement (FP1) qui entre en contact avec le premier plan de contact (AP1), dans lequel le traitement et le positionnement du premier point de raccordement (FP1) sont effectués sur la base d'un couple de serrage prédéterminé.

7. Procédé selon l'une quelconque des revendications précédentes, comprenant l'étape :
- du traitement du premier tronçon de fil d'assemblage (17) pour comprendre au moins un trou transversal (13) qui s'étend transversalement à l'axe z (Z).

8. Configuration de traitement pour la fabrication de tronçons de tige filetée (1', 1"), dont chacun s'étend le long d'un axe z (Z), dans laquelle la configuration de traitement comprend :
- une unité d'alimentation (33) agencée pour l'alimentation d'une pièce (23) agencée avec au moins une rainure filetée (11) vers une pince (35) pour la fixation de la pièce (23) ;
- un dispositif de positionnement (37) agencé de telle sorte qu'il peut être commandé pour positionner un premier outil de traitement (V1) pour le traitement d'un premier plan de contact (AP1) sur la pièce s'étendant transversalement à l'axe z (Z) ; **caractérisée en ce que :**
- le dispositif de positionnement (37) est agencé de manière à pouvoir être commandé pour positionner un capteur (25) pour la mesure dans le premier plan de contact (AP1) et un premier point de référence (RP1) au niveau de la rainure filetée (11) ;
- le dispositif de positionnement (37) est agencé de telle sorte qu'il peut être commandé pour positionner un deuxième outil de traitement (V2) pour le traitement d'un premier tronçon de fil d'assemblage (17) faisant apparaître au moins un premier fil.

9. Configuration de traitement selon la revendication 8, **dans laquelle** le capteur (25) comprend une sonde de mesure.

10. Configuration de traitement selon la revendication 8 ou 9, **dans laquelle** le deuxième outil d'usinage (V2) comprend un outil de coupe de fil et / ou un outil de fraisage de fil.

11. Configuration de traitement selon l'une quelconque des revendications 8 à 10, dans laquelle le dispositif de positionnement (37) est relié à une unité de commande (SE) agencée pour commander le premier outil de traitement (V1), le capteur (25) et le deuxième outil de traitement (V2) indépendamment l'un de l'autre.

12. Machine multi-opérations (31) comprenant une configuration de traitement selon l'une quelconque des revendications 8 à 11.

13. Machine multi-opérations (31) selon la revendication 12, dans laquelle la machine multi-opérations est agencée pour la fabrication entièrement ou partiellement automatique de tronçons de tige filetée (1', 1").

14. Programme informatique (P) à exécuter sur une configuration de traitement pour la fabrication de tronçons de tige filetée (1', 1"), dont chacun s'étend le long d'un axe z (Z), **dans laquelle** la configuration de traitement comprend
- une unité d'alimentation (33) agencée pour l'alimentation d'une pièce (23) agencée avec au moins une rainure filetée (11) vers une pince (35) pour la fixation de la pièce (23) ; et
- un dispositif de positionnement (37) agencé de telle sorte qu'il peut être commandé pour positionner un premier outil de traitement (V1) pour le traitement d'un premier plan de contact (AP1) sur la pièce s'étendant transversalement à l'axe z (Z) ;
**caractérisé en ce que**
- le dispositif de positionnement (37) est agencé de manière à pouvoir être commandé pour positionner un capteur (25) pour la mesure dans le premier plan de contact (AP1) et un premier point de référence (RP1) au niveau de la rainure filetée (11) ;
- le dispositif de positionnement (37) est agencé de telle sorte qu'il peut être commandé pour positionner un deuxième outil de traitement (V2) pour le traitement d'un premier tronçon de fil d'assemblage (17) faisant apparaître au moins un premier fil, **dans lequel** le programme informatique (P) comprend un code de programme stocké sur un support lisible par un ordinateur pour réaliser les étapes de procédé selon l'une quelconque des revendications 1 à 7 lorsque le programme d'ordinateur (P) est exécuté sur une unité de commande (SE) relié au dispositif de positionnement (37).
